Europäisches Patentamt

European Patent Office

Office européen des brevets

(19)

(11) Publication number: **0 125 124**
**A1**

(12) # EUROPEAN PATENT APPLICATION

(21) Application number: **84303032.1**

(22) Date of filing: **04.05.84**

(51) Int. Cl.³: **A 01 D 87/12**

(30) Priority: **07.05.83 GB 8312640**

(43) Date of publication of application:
**14.11.84 Bulletin 84/46**

(84) Designated Contracting States:
**AT BE CH DE FR GB IT LI NL SE**

(71) Applicant: **Powner, Nigel William**
**Manor House Farm**
**Aston Flamville Nr. Hinckley Leicestershire(GB)**

(72) Inventor: **Powner, Nigel William**
**Manor House Farm**
**Aston Flamville Nr. Hinckley Leicestershire(GB)**

(74) Representative: **SERJEANTS**
**25, The Crescent King Street**
**Leicester, LE1 6RX(GB)**

(54) Bale lifting attachment for tractors.

(57) A bale lifting attachment for securing to the three point linkage of a tractor includes a mounting (2) adapted for securing to the three point linkage, an arm (16) pivotably mounted at one end on the mounting (2) for pivoting about a first transverse axis (18), a ram (14) for controlling pivotal movement of the arm (16) for movement between a low and elevated attitude, tyne means (22, 36) for penetrating a bale pivotably mounted on the other end of the arm (16) for movement about a second transverse axis (19) and a ram (28) for controlling pivotal movement of a tyne (36). Overall the tyne (36) can be moved downwards or sideways into and out of a bale by operation of the rams (14, 28) and the bale can be lifted up centrally over the rear wheels for transport.

FIG. 1

- 1 -

TITLE:- "BALE LIFTING ATTACHMENT FOR TRACTORS"

DESCRIPTION

## Field of invention

The invention relates to bale lifting attachments for tractors and particularly to attachments for manipulating big straw bales of cylindrical shape as produced by so called "big baler" machines, made by for example Welger.

## Background of invention

Big bales of cylindrical shap may weigh up to half a ton and can be shifted by tractors. Previously front or rear end loaders have been adapted in a variety of ways for this purpose. However it has been difficult at times to disengage from a bale. Weight may have been placed on front wheels of a tractors which wheels are primarily intended for steering where front end loaders have been adapted. So called "big bag" silage systems are difficult to execute because the plastics bag used in this system tends to tear when it is pulled around the bale. Tractors equipped with a for k-lift type boom arrangement at the front require overhead clearance and do not provide good visibility. The known arrangements may require tractors to be adapted in a complicated manner reducing their suitability for other farming functions. Known arrangements may also be costly.

It is amongst the objects of the invention to provide a bale lifting attachment of a more convenient design which overcomes the aforementioned difficulties.

Brief Description of Invention

Accordingly the invention provides a bale lifting attachment for a tractor including a mounting for securing to a three point linkage on a tractor, an arm pivotably mounted at one end on the mounting and means for controlling pivotal movement of the arm with respect to the mounting between a low and elevated attitude, tyne means for penetrating the bale pivotably mounted on the other end of the arm and means for controlling pivotal movement of the tyne means with respect to the arm. The controlling means may be rams.

Preferably the tyne means include a tyne mounting and a removable cylindrical pointed tyne. The tyne can then be replaced by other tynes or other implements if desired. Conveniently the pivotable arm is mounted on a pivot axis spaced upwards from the connecting brackets for the three point linkage and the associated ram is anchored at a position below the brackets to extend between the connecting brackets to a position along the pivotably arm. A compact construction results.

The attachment greatly facilitates the handling of big bales. The attachment is adapted for securing to the three point linkage and can be operated in full view of the driver. A simple articulation arrangement provides an easily controlled wide range of bale movement which nevertheless does not destabilise the tractor. The bale can be presented free of obstructions for enveloping in a plastics bag for silage. The bale can be lifted up centrally over the tractor wheels for transport. The weight is then concentrated on the tractor rear wheels. Disengaging the tyne from the bale is easy, aided perhaps by the fact that the angle of the tyne with respect to the bale can be adjusted prior to tyne withdrawal. The attachment is simple and compact and can be removed from a tractor and stored conveniently. No extra overhead clearance is necessary as is the case where a fork-lift type construction is used.

DRAWINGS

Figure 1 is a perspective view from one side of the attachment parked in position;

Figure 2 is a perspective view from the other side; and

Figures 3A to 3C show different operational modes of the attachment in use.

Description with reference to drawings

An attachment has a frame 2 carrying brackets 4 and 6 for mounting to the three point linkage of the tractor shown at 8. The frame or mounting 2 supports retractable parking legs 10 and a bracket 12 for mounting one end of a ram 14. A pivotable arm 16 is journalled at its rear end to pivot about transverse axis 18 on the frame 2. The frame 2 has two spaced bearing positions 17 to firmly support the arm 16. The arm 16 includes two spaced plate members 39 and has an anchor pin 20 on it for the other end of the ram 14. The ram 14 extends through a recess 21 to the rear of the mounting 2.

A tyne support 22 is pivoted on the front end of the arm 16 for movement about transverse axis 19 and includes a bracket 24 for an anchor pin 26 for a further ram 28 whose other end is anchored at 30 on the arm 16. The support 22 also includes a plate 32 for securing by high tensile bolts 34 a tyne 36 having a matching plate 38 at the top and ending in a point at its free end 37.

The usual hoses (not shown) are used for actuating the double-acting rams 14 and 28.

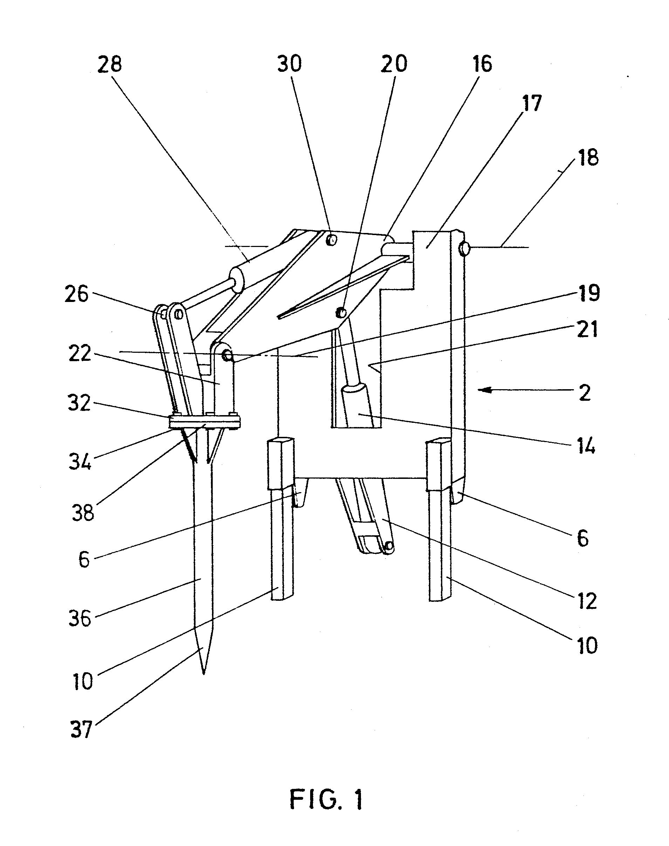

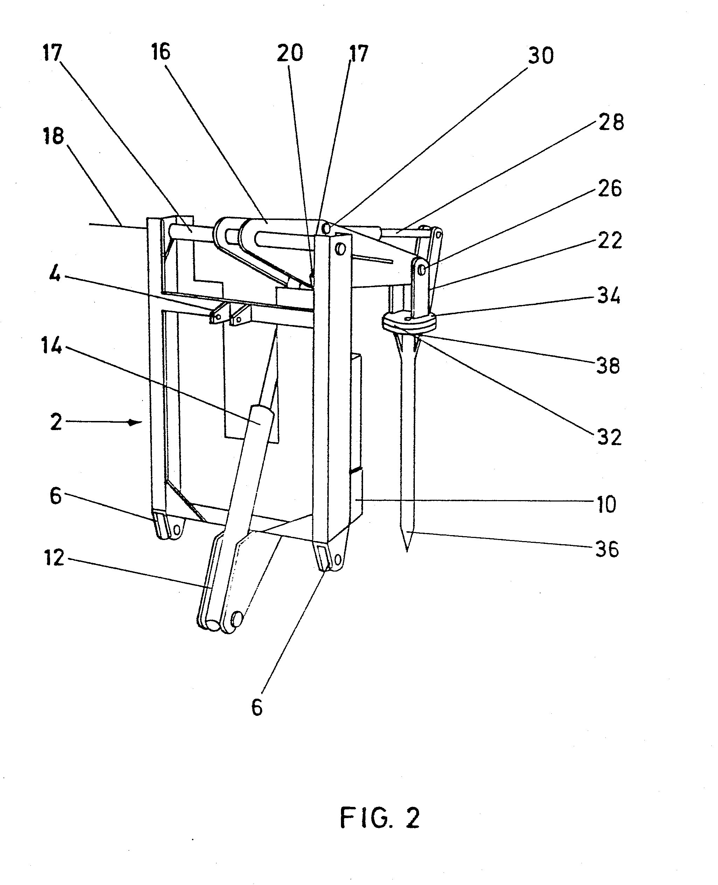

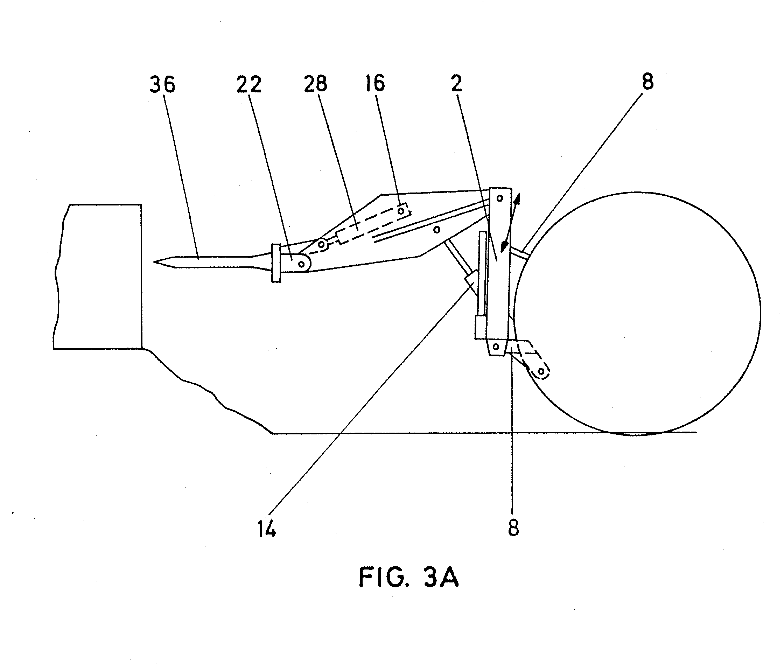

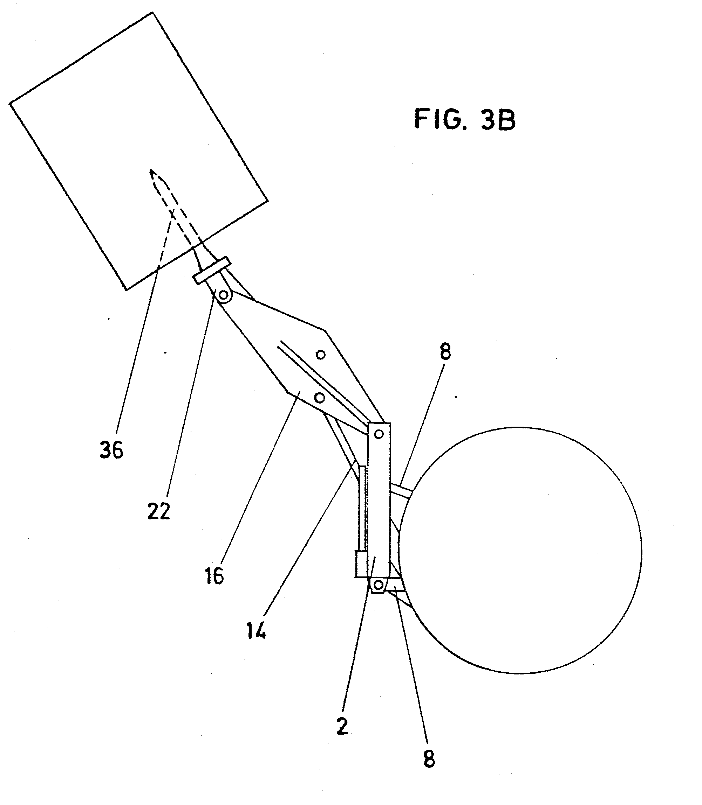

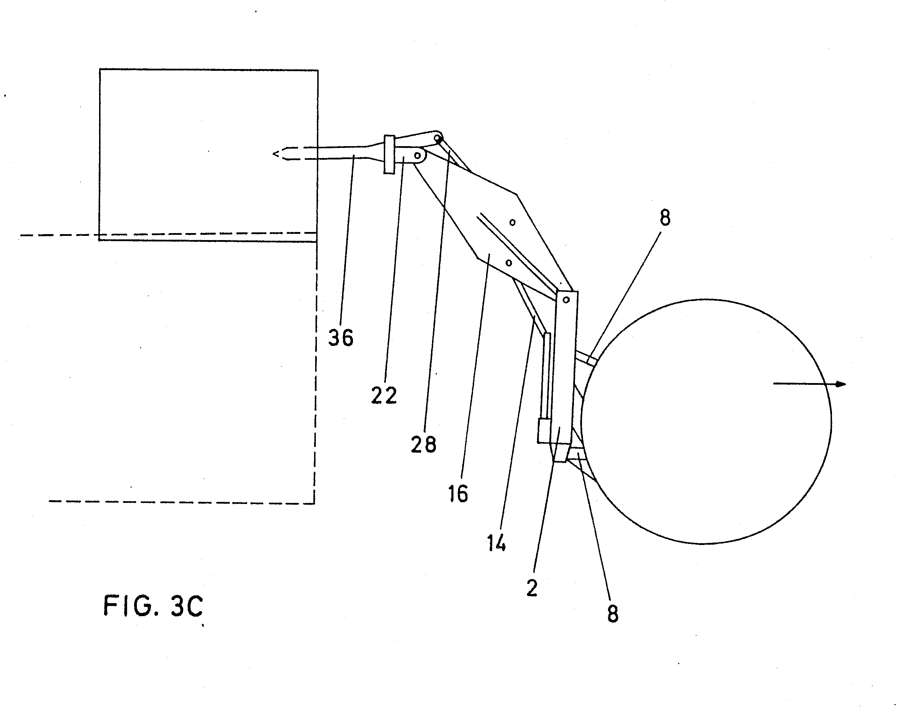

When not in use the attachment is parked with legs 10 lowered as shown in Figure 1. To mount the attachment the three point linkage is secured to the brackets 4 and 6 best seen in Figure 2. Different operational modes permit the tyne to be held horizontal and driven into a big bale 40 up to the plate 38 by moving the tractor 42 rearwards (Figures 3A). The bale can then be tipped up for transport (Figure 3B). To release the arm 16 and the three point linkage are operated to bring the tyne 36 to the appropriate level and using the ram 14 the tyne 36 is aligned with the bale 40 for withdrawl (Figure 3C). Normally the bales are arranged horizontally but the attachment can also be used to stand the bales 40 on end. It can be seen that the bales can be easily wrapped in a plastics bag for silage. The tyne can engage and disengage from bales at high and low levels. The three point linkage can be raised or lowered for extra manoeuvrability, but is generally set to ensure that the tyne enters a bale on the ground centrally when the arm is in the lower most position. The tyne can be pivoted about a wide arc (circa 180°) to permit the tyne to be lowered vertically into an upstanding bale and to be held upwards for transport. The attachment can be fastened quickly and securely to the three point linkage. Becuase the pivotal movement is limited to a pair of horizontal axes, the risk of the tractor becoming unstable is reduced as the load of the bale is always taken centrally with respect to the tractor wheel basis.

CLAIMS

1.    A bale lifting attachment for securing to the three point linkage at the rear of a tractor characterised by a mounting (2) for securing to the three point linkage, an arm (16) pivotably connected at one end to the mounting (2) for pivoting about a first transverse axis (18), a means (14) for controlling pivotal movement of the arm (16) between a low and elevated attitude, tyne means (22, 36) pivotably connected to the other end of the arm (16) for pivoting about a second transverse axis (19) capable of penetrating a bale at its free end (37) and means (28) for controlling pivotal movement of the tyne between a downwardly pointing and upwardly pointing attitude.

2.    A bale lifting attachment according to claim 1 further characterised in that the arm (16) is pivotably supported on either side at two transversely spaced bearing positions (17) on the mounting (2) and the transverse axes (18 and 19) provide the only axes of articulation for the tyne means (22, 36) with respect to the mounting (2).

3.    A bale lifting attachment according to claim 2 further characterised in that the axis (18) is located spaced upwards from an upper connecting bracket (4) for the three point linkage and the controlling means (14) is a ram anchored at one end on the arm (16) and at its other end at a position adjacent and between a pair of lower connecting brackets (6) of the three point linkage.

4.   A bale lifting attachment according to claim 3 further characterised in that the ram (14) is anchored below and forward of the brackets (16), extending through a recess in the mounting (2) to the arm (16).

5.   A bale lifting attachment according to claim 4 further characterised in that the arm (16) includes a pair of spaced plate members (39), the controlling means (28) is a ram anchored at one end (30) to the arm (16) and lying substantially between the plate members (39) and connected at the other end to a bracket (24) on the opposite side of the transverse axis (19) from the tyne (36) of the tyne means (22,36) at a short radius to provide a large pivotal movement of the tyne (36).

6.   A bale lifting attachment according to claim 5 further characterised in that means (34) removably secure the tyne (36).

1/5

0125124

FIG. 1

FIG. 2

FIG. 3A

FIG. 3B

0125124

FIG. 3C

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-A-4 302 139 (E.K. MALISH)<br>* Claims 1, 3, 4; column 1, line 39 - column 2, line 4; column 2, line 45 - column 3, line 68; figures 1-4 * | 1 | A 01 D 87/12 |
| A | | 2 | |
| Y | FR-A-2 478 610 (ETS A. SUIRE)<br>* Page 1, line 36 - page 2, line 31; figure 1 * | 1 | |
| A | | 2,5 | |
| A | GB-A-1 548 029 (LISTER FARM EQUIPMENT)<br>* Page 1, line 77 - page 2, line 53; figures 1-3 * | 1,2,5 | |

**TECHNICAL FIELDS SEARCHED (Int. Cl. ³)**

A 01 D 87/12
A 01 D 90/08

The present search report has been drawn up for all claims

| Place of search | Date of completion of the search | Examiner |
|---|---|---|
| BERLIN | 28-06-1984 | BERGZOLL M C |